# EUROPEAN PATENT SPECIFICATION

(11) **EP 1 923 352 B1**
(45) Date of publication and mention of the grant of the patent: **23.06.2010**
(21) Application number: 07116182.2
(22) Date of filing: 12.09.2007
(51) Int. Cl.: C01G 31/00, C01G 37/00, C01G 39/00, C01G 41/00, H01M 4/58

(54) **Negative active material for rechargeable lithium battery, method of preparing the same, and rechargeable lithium battery including the same**
Negativ-Aktivmaterial für eine wiederaufladbare Lithiumbatterie, Herstellungsverfahren desselben und wiederaufladbare Lithiumbatterie dieses enthaltend
Matériau actif négatif pour une batterie au lithium rechargeable, procédé de préparation de celui-ci, et batterie au lithium rechargeable comprenant celui-ci

(30) Priority: 20.11.2006 KR 20060114515
(43) Date of publication of application: 21.05.2008
(73) Proprietor: Samsung SDI Co., Ltd., Suwon-si Gyeonggi-do (KR)
(72) Inventor: Kim, Joon-Sup Legal & IP Team, Samsung SDI Co., LTD., Gyeonggi-do (KR); Kim, Sung-Soo Legal & IP Team, Samsung SDI Co., LTD., Gyeonggi-do (KR); Lee, Jea-Woan Legal & IP Team, Samsung SDI Co., LTD., Gyeonggi-do (KR); Kim, Sang-Jin Legal & IP Team, Samsung SDI Co., LTD., Gyeonggi-do (KR)
(74) Representative: Hengelhaupt, Jürgen

(56) References cited:
- EP-A- 1 511 101
- EP-A- 1 801 908
- US-A1- 2006 088 766
- N. VAN LANDSCHOOT , E. M. KELDER AND J. SCHOONMAN: "Citric acid-assisted synthesis and characterization of doped LiCoVO4" SOLID STATE IONICS, vol. 166, no. 3-4, 2004, pages 307-316, XP002475389
- A. SIVASHANMUGAM, R. THIRUNAKARAN, MEIJING ZOU, MASAKI YOSHIO, JUN-ICHI YAMAKI AND S. GOPUKUMAR: "Glycine-Assisted Sol-Gel Combustion Synthesis and Characterization of Aluminum-Doped LiNiVO4 for Use in Lithium-Ion Batteries" JOURNAL OF THE ELECTROCHEMICAL SOCIETY, vol. 153, no. 3, 24 January 2006 (2006-01-24), pages A497-A503, XP002475390

## Description

### BACKGROUND OF THE INVENTION

### 1. Field of the Invention

The present invention relates to negative active materials for rechargeable lithium batteries, methods of preparing the same, and rechargeable lithium batteries including the same.

### 2. Description of the Related Art

Rechargeable lithium batteries have recently drawn attention as power sources for small, portable electronic devices. These batteries use organic electrolyte solutions and therefore have twice the discharge voltages of conventional batteries using alkaline aqueous solutions. Accordingly, lithium rechargeable batteries have high energy densities.

Lithium-transition element composite oxides capable of intercalating lithium, such as LiCoO₂, LiMn₂O₄, LiNiO₂, LiNi₁₋ₓCoₓO₂ (0<x<1), LiMnO₂, and so on, have been researched for use as positive active materials of lithium rechargeable batteries.

Various carbon-based materials, such as artificial and natural graphite and hard carbon, all of which can intercalate and deintercalate lithium ions, have been used as negative active materials. Of the carbon-based materials, graphite increases battery discharge voltages and energy densities because it has a low discharge potential of-0.2V compared to lithium. Batteries using graphite as the negative active material have high average discharge potentials of 3.6V and excellent energy densities. Furthermore, graphite is the most comprehensively used of the aforementioned carbon-based materials because graphite imparts better battery cycle life due to its outstanding reversibility. However, when used as negative active materials, graphite active materials have low densities and consequently low capacity in terms of energy density per unit volume. Further, there is some danger of explosion or combustion when a battery is misused, overcharged, or the like, because graphite is likely to react with the organic electrolyte at high discharge voltages.

To address these concerns, research has recently been conducted into oxide negative electrodes. For example, amorphous tin oxide has a high capacity per weight (800 mAh/g). However, this oxide has resulted in some critical defects such as a high initial irreversible capacity of up to 50%. Furthermore, part of the tin oxide tends to reduce into tin during the charge or discharge reaction, rendering it disadvantageous for use in a battery.

In another oxide negative electrode, LiₐMg_{b}VO_{c} (where 0.05 ≤ a ≤ 3, 0.12 ≤ b ≤ 2, 2 ≤ 2c-a-2b 5 5) is used as the negative active material. Another lithium secondary battery includes a Li_{1.1}V_{0.9}O₂ negative active material. However, such oxide negative electrodes do not impart sufficient battery performance and therefore further research into oxide negative materials has been conducted. Further examples of negative active materials are disclosed in EP 1 801 908 A1, EP 1 511 101 A2, US 2006/0088766 A1 and van Landschoot et al., Solide State Ionics, 166, (2004), 307 - 316.

### SUMMARY OF THE INVENTION

One embodiment of the present invention provides a negative active material for a rechargeable lithium battery that imparts excellent battery cycle-life characteristics. Another embodiment of the present invention provides a method of preparing the negative active material.

Yet another embodiment of the present invention provides a negative electrode and a rechargeable lithium battery including the negative active material.

According to one embodiment of the present invention, a negative active material for a rechargeable lithium battery includes secondary particles formed by assembly of primary particles. The primary particles include a compound of the following Formula 1.

**Chemical Formula 1** LiₓM_{y}V_{z}O_{2+d}

In Formula 1, 0.1 ≤ x ≤ 2.5, 0 ≤ y ≤ 0.5, 0.5 ≤ z ≤ 1.5, 0 ≤ d ≤ 0.5, and M is a metal selected from Al, Cr, Mo, Ti, W, Zr, and combinations thereof. According to one embodiment, M is either Mo or W.

According to one embodiment, the primary particles have an average particle diameter ranging from 0.1 to 10µm. The primary particles may have a layered structure.

In another embodiment, the secondary particles have an average particle diameter ranging from 2 to 50µm.

According to another embodiment of the present invention, a method of preparing a negative active material for a rechargeable lithium battery includes forming a composition by dissolving a vanadium source material, a lithium source material, and an M source material in a solvent. The method further includes adding a chelating agent to the composition to prepare a gel, drying the gel to prepare an organic-inorganic precursor, and subjecting the precursor to heat treatment.

The vanadium source material may be selected from vanadium metal, VO, V₂O₃, V₂O₄, V₂O₅, V₄O₇, VOSO₄·H₂O, NH₄VO₃, and mixtures thereof.

The lithium source material may be selected from lithium carbonates, lithium hydroxides, lithium nitrates, lithium acetates, and mixtures thereof.

The M source material may be selected from M-containing oxides, M-containing hydroxides, and mixtures thereof. In one embodiment, for example, M may be selected from Al, Cr, Mo, Ti, W, Zr, and combinations thereof.

The chelating agent may be selected from polyvinyl alcohols, polyalkylene glycols, poly(meth)acrylic acids, polyvinylbutyral, carboxylic acid, and mixtures thereof.

The drying may be performed at a temperature ranging from 100 to 400°C.

The heat treatment is performed at a temperature ranging from 800 to 1200°C. Further, the heat treatment may be performed under a nitrogen atmosphere.

According to yet another embodiment of the present invention, a negative electrode includes the negative active material.

According to another embodiment of the present invention, a rechargeable lithium battery includes a negative electrode including the negative active material, a positive electrode including a positive active material, and an electrolyte.

### BRIEF DESCRIPTION OF THE DRAWINGS

The above and other features of the present invention will become more apparent by reference to the following detailed description when considered in conjunction with the attached drawings, in which:
FIG. 1 is a schematic cross-sectional view of a rechargeable lithium battery according to one embodiment of the present invention;
FIG. 2 is a scanning electron microscope ("SEM") photograph of a negative active material prepared according to Example 1;
FIG. 3 is a SEM photograph of a negative active material prepared according to Comparative Example 1;
FIG. 4 is a SEM photograph of a negative active material prepared according to Comparative Example 2;
FIG. 5 is a SEM photograph of a negative active material prepared according to Comparative Example 3;
FIG. 6 is a graph depicting the results of X-ray diffraction analysis of a negative active material prepared according to Example 1;
FIG. 7 is a graph depicting the results of X-ray diffraction analysis of a negative active material prepared according to Comparative Example 1;
FIG. 8 is a graph of the results of X-ray diffraction analysis of a negative active material prepared according to Comparative Example 2; and
FIG. 9 is a graph of the results of X-ray diffraction analysis of a negative active material prepared according to Comparative Example 3.

### DETAILED DESCRIPTION OF THE EMBODIMENTS

According to one embodiment of the present invention, a negative active material for a rechargeable lithium battery imparts better battery cycle-life characteristics than a conventional negative active material.

In one embodiment, the negative active material includes secondary particles formed by assembly of primary particles. The primary particles include a compound represented by the following Formula 1.

**Chemical Formula 1** LiₓM_{y}V_{z}O_{2+d}

In Formula 1, 0.1 ≤ x ≤ 2.5, 0 ≤ y ≤ 0.5, 0.5 ≤ z ≤ 1.5, 0 ≤ d ≤ 0.5, and M is a metal selected from Al, Cr, Mo, Ti, W, Zr, and combinations thereof. According to one embodiment, M is either Mo or W.

In Formula 1, when x, y, z, and d are outside the aforementioned ranges, the negative active material may have a high average potential of greater than 1.0V against a lithium metal, resulting in decreased battery discharge voltage. In particular, metal vanadium oxide (not including Li (i.e., x=0)) negative active materials have different crystalline structures from those of the negative active materials of the present invention. In addition, since the metal vanadium oxides have average discharge potentials of greater than 1.0 V, they may be problematic for use as negative electrodes.

The primary particles can be synthesized, for example, by substituting the Co of LiCoO₂ with another transition element, such as V, and a second metal element, such as Al, Mo, W, Ti, Cr, Zr, or combinations thereof. The synthesized primary particles may have a layered structure.

The primary particles may have an average particle diameter ranging from 0.1 to 10µm. According to one embodiment, the primary particles have an average particle diameter ranging from 0.1 to 1µm. In another embodiment, the primary particles have an average particle diameter ranging from 1 to 3µm. In yet another embodiment, the primary particles have an average particle diameter ranging from 3 to 5µm. In still yet another embodiment, the primary particles have an average particle diameter ranging from 5 to 7µm. In still another embodiment, the primary particles have an average particle diameter ranging from 7 to 10µm. According to one embodiment, the primary particles have an average particle diameter ranging from 1 to 5µm. When the primary particles have an average particle diameter smaller than 0.1µm, initial efficiency may be decreased. When the average particle diameter is greater than 10µm, capacity may be reduced.

The primary particles are assembled to form secondary particles during the preparation of the active material. The secondary particles may have an average particle diameter ranging from 2 to 50µm. According to one embodiment, the secondary particles have an average particle diameter ranging from 2 to 15µm. In another embodiment, the secondary particles have an average particle diameter ranging from 15 to 30µm. In yet another embodiment, the secondary particles have an average particle diameter ranging from 30 to 50µm. According to another embodiment, the secondary particles have an average particle diameter ranging from 5 to 10µm. In still another embodiment, the secondary particles have an average particle diameter ranging from 15 to 20µm. In still yet another embodiment, the secondary particles have an average particle diameter ranging from 25 to 30µm. When the secondary particles have an average particle diameter smaller than 2µm, initial efficiency may be decreased. When the average particle diameter is greater than 50µm, capacity may be reduced.

According to one embodiment, a method for making the negative active material having the above structure includes forming a composition by dissolving a vanadium source material, a lithium source material, and a M source material in a solvent. The method further includes adding a chelating agent to the composition to prepare a gel, drying the gel to prepare an organic-inorganic precursor, and subjecting the precursor to heat treatment.

First, a composition for preparing the active material is prepared by dissolving a vanadium source material, a lithium source material, and a metal source material in a solvent.

The vanadium source material may be selected from vanadium metal, VO, V₂O₃, V₂O₄, V₂O₅, V₄O₇, VOSO₄·H₂O, NH₄VO₃, and mixtures thereof.

The lithium source material may be selected from lithium carbonates, lithium hydroxides, lithium nitrates, lithium acetates, and mixtures thereof.

The M source material may be selected from oxides, hydroxides, and mixtures thereof, where M is selected from Al, Cr, Mo, Ti, W, Zr, and combinations thereof. Nonlimiting examples of the M source material include Al(OH)₃, Al₂O₃, Cr₂O₃, MoO₃, TiO₂, WO₃, and ZrO₂.

The solvent may be selected from distilled water, alcohols, and mixtures thereof.

The mixing ratio of the vanadium source material, lithium source material, and metal source material can be controlled to provide the intended composition ratio of the compound of Formula 1.

A chelating agent is added to the composition for preparing the active material to prepare a gel. The chelating agent imparts uniformity of the medium. Further, the size and shape of the active material particles and surface characteristics can be controlled by adjusting the amount of the chelating agent, the kind of the metal salt, and the temperature and length of heat treatment.

The chelating agent may be an organic polymer material having a hydrophilic side chain. Nonlimiting examples of suitable chelating agents include polyvinyl alcohols, polyalkylene glycols (such as polyethylene glycol and polypropylene glycol), poly(meth)acrylic acids, polyvinylbutyral, carboxylic acids (such as glycine, citric acid, and oxalic acid), and mixtures thereof.

The chelating agent may be added in an amount ranging from 0.25 to 10 moles based on 1 mole of total metal ions in the active material composition. According to one embodiment, the chelating agent may be added in an amount ranging from 0.25 to 1 mole based on 1 mole of total metal ions in the active material composition. In another embodiment, the chelating agent may be added in an amount ranging from 1 to 3 moles based on 1 mole of total metal ions in the active material composition. In yet another embodiment, the chelating agent may be added in an amount ranging from 3 to 5 moles based on 1 mole of total metal ions in the active material composition. In still another embodiment, the chelating agent may be added in an amount ranging from 5 to 7 moles based on 1 mole of total metal ions in the active material composition. In still yet another embodiment, the chelating agent may be added in an amount ranging from 7 to 10 moles based on 1 mole of total metal ions in the active material composition. According to another embodiment, the chelating agent may be added in an amount ranging from 1 to 5 moles based on 1 mole of total metal ions in the active material composition. The chelating agent can be dissolved in distilled water to prepare a solution, which is then added to the active material composition. When the amount of the chelating agent is less than 0.25 moles, the intended material phase change is not adequately effected. When the amount of the chelating agent is greater than 10 moles, residues remaining after reaction may increase.

The active material composition and the chelating agent solution are mixed and the chelating agent is then chelated to the metal ions. This results in the uniform distribution of the metal ions and the chelating agent in solution.

The resulting mixed solution is heated at a temperature ranging from 100 to 400°C to evaporate water, producing an organic-inorganic precursor in which the metal ions and the chelating agent are bound to each other. According to one embodiment, the mixed solution is heated at a temperature ranging from 100 to 200°C. According to another embodiment, the mixed solution is heated at a temperature ranging from 200 to 300°C. In yet another embodiment, the mixed solution is heated at a temperature ranging from 300 to 400°C. According to still another embodiment, the mixed solution is heated at a temperature ranging from 150 to 200°C. In still another embodiment, the mixed solution is heated at a temperature ranging from 200 to 250°C. In still yet another embodiment, the mixed solution is heated at a temperature ranging from 250 to 300°C. When the heating temperature is lower than 100°C, drying time may be increased. When the heating temperature is greater than 400°C, uniformity of the precursor may be decreased.

The above prepared precursor may have an average particle size of sub-microns.

The precursor is then heated to prepare a negative active material for a rechargeable lithium battery. The negative active materials include secondary particles including assemblies of primary particles represented by Formula 1. The heating is performed at a temperature ranging from 800 to 1200°C. In one embodiment, the heating is performed at a temperature ranging from 900 to 1000°C. When the heating is performed at a temperature lower than 800°C, crystallinity may be reduced. When heating is performed at a temperature greater than 1200°C, impurities, including undesired phases, may be produced.

The heating may be performed for from 3 to 15 hours. In one embodiment, the heating is performed for from 5 to 10 hours. When the heating is performed for less than 3 hours, the average particle diameter of the active material may be reduced. When heating is performed for more than 15 hours, the average particle diameter may be excessively large.

The heating may be performed under a nitrogen atmosphere in order to remove impurities, such as undesired phases.

The negative active material for a rechargeable lithium battery prepared according to the above method includes secondary particles including assemblies of primary particles. The active material has good conductivity, and impart good cycle-life and low temperature characteristics. Thus, the active materials improve battery characteristics, such as initial efficiency.

The above negative active material is used for negative electrodes of rechargeable lithium batteries. According to one embodiment of the present invention, a rechargeable lithium battery includes a negative electrode including a negative active material, a positive electrode including a positive active material, and an electrolyte.

Rechargeable lithium batteries may be classified as lithium ion batteries, lithium ion polymer batteries, and lithium polymer batteries according to the presence of a separator and the kind of electrolyte used in the battery. Rechargeable lithium batteries may have a variety of shapes and sizes, including cylindrical, prismatic, or coin-type batteries, and may be thin film batteries or rather bulky in size. Structures and fabricating methods for lithium batteries pertaining to the present invention are well known in the art.

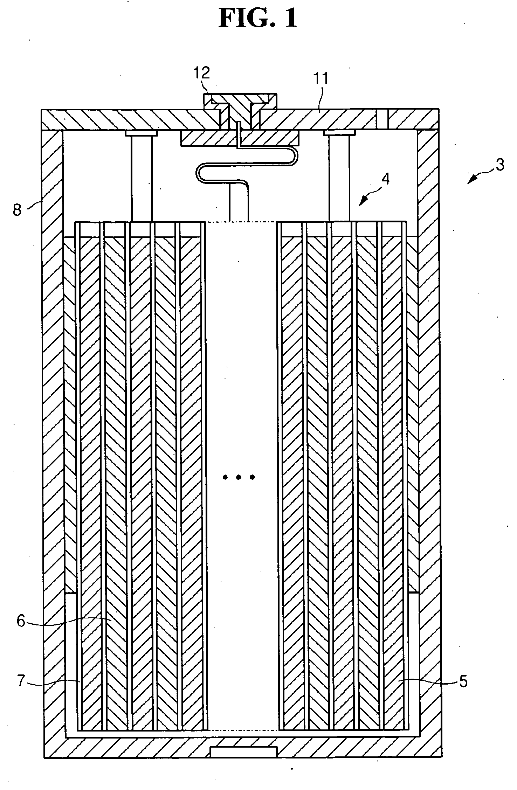

FIG. 1 illustrates an exemplary structure of a rechargeable lithium battery according to one embodiment of the present invention. As shown in FIG. 1, a rechargeable lithium battery 3 includes an electrode assembly 4, which includes a positive electrode 5, a negative electrode 6, and a separator 7 between the positive electrode 5 and the negative electrode 6. The electrode assembly 4 is housed in a battery case 8, which is sealed by a cap plate 11 and a gasket 12. After sealing the battery case, an electrolyte is injected through an opening in the battery case 8 to complete the battery.

The negative electrode includes a negative active material, which may be an above described negative active material or a mixture of first and second negative active materials in which the first negative active material is an above described negative material and the second negative active material is a carbon-based negative active material (such as graphite). The mixture may include the first negative active material and the second negative active material in a weight ratio ranging from 1:99 to 99:1. According to one embodiment, the mixture includes the first negative active material and the second negative active material in a weight ratio ranging from 10:90 to 90:10.

The negative electrode may be fabricated by mixing the negative active material, a binder, and optionally a conductive agent in a solvent to form a composition, which is then applied on a negative current collector such as copper. The negative electrode manufacturing method is well known.

Nonlimiting examples of suitable binders include polyvinyl alcohol, carboxymethyl cellulose, hydroxypropylene cellulose, diacetylene cellulose, polyvinylchloride, carboxylated polyvinylchloride, polyvinyldifluoride, ethylene oxide-containing polymers, polyvinylpyrrolidone, polyurethane, polytetrafluoroethylene, polyvinylidene fluoride, polyethylene, polypropylene, styrene-butadiene rubbers, acrylated styrene-butadiene rubbers, epoxy resins, and polyamide.

Any electrically conductive material can be used as the conductive agent so long as it does not cause a chemical change. Nonlimiting examples of suitable conductive agents include natural graphite, artificial graphite, carbon black, acetylene black, ketjen black, carbon fiber, polyphenylene derivatives, and metal powders or metal fibers including copper, nickel, aluminum, silver, and so on.

One nonlimiting example of a suitable solvent is N-methyl pyrrolidone.

The current collector may be selected from copper foils, nickel foils, stainless steel foils, titanium foils, nickel foams, copper foams, polymer substrates coated with conductive metals, and combinations thereof.

The positive electrode includes a positive active material, which may be a lithiated intercalation compound capable of reversibly intercalating and deintercalating lithium. Nonlimiting examples of suitable positive active materials include composite oxides including lithium and a metal selected from cobalt, manganese, nickel, and combinations thereof. Nonlimiting examples of suitable composite oxides include the compounds represented by Formulas 2 to 25.

**Chemical Formula 2** LiₐA_{1-b}B_{b}D₂

In Formula 2, 0.95 ≤ a ≤ 1.1, and 0 ≤ b ≤ 0.5.

**Chemical Formula 3** LiₐE_{1-b}B_{b}O_{2-c}F_{c}

In Formula 3, 0.95 ≤ a ≤ 1.1, 0 ≤ b ≤ 0.5, and 0 ≤ c ≤ 0.05.

**Chemical Formula 4** LiE_{2-b}B_{b}O_{4-c}F_{c}

In Formula 4, 0 ≤ b ≤ 0.5, and 0 ≤ c ≤ 0.05.

**Chemical Formula 5** LiₐNi_{1-b-c}Co_{b}B_{c}D_{α}

In Formula 5, 0.95 ≤ a ≤ 1.1, 0 ≤ b ≤ 0.5, 0 ≤ c ≤ 0.05, and 0 < α ≤ 2.

**Chemical Formula 6** LiₐNi_{1-b-c}Co_{b}B_{c}O₂₋ₐF_{α}

In Formula 6, 0.95 ≤ a ≤ 1.1, 0 ≤ b ≤ 0.5, 0 ≤ c ≤ 0.05, and 0 < α < 2.

**Chemical Formula 7** LiₐNi_{1-b-c}Co_{b}B_{c}O_{2-α}F₂

In Formula 7, 0.95 ≤ a ≤ 1.1, 0 ≤ b ≤ 0.5, 0 ≤ c ≤ 0.05, and 0 < α < 2.

**Chemical Formula 8** LiₐNi_{1-b-c}Mn_{b}B_{c}D_{α}

In Formula 8, 0.95 ≤ a ≤ 1.1, 0 ≤ b ≤ 0.5, 0 ≤ 0.05, and 0 < α ≤ 2.

**Chemical Formula 9** LiₐNi_{1-b-c}Mn_{b}B_{c}O_{2-α}F_{α}

In Formula 9, 0.95 ≤ a ≤ 1.1, 0 ≤ b ≤ 0.5, 0 ≤ c ≤ 0.05, and 0 < α < 2.

**Chemical Formula 10** LiₐNi_{1-b-c}Mn_{b}B_{c}O_{2-α}F₂

In Formula 10, 0.95 ≤ a ≤ 1.1, 0 ≤ b ≤ 0.5, 0 ≤ c ≤ 0.05, and 0 < α < 2.

**Chemical Formula 11** LiₐNi_{b}E_{c}G_{d}O₂

In Formula 11, 0.90 ≤ a ≤ 1.1, 0 ≤ b ≤ 0.9, 0 ≤ c ≤ 0.5, and 0.001 ≤ d ≤ 0.1.

**Chemical Formula 12** LiₐNi_{b}Co_{c}Mn_{d}GₑO₂

In Formula 12, 0.90 ≤ a ≤ 1.1, 0 ≤ b ≤ 0.9, 0 ≤ c ≤ 0.5, 0 ≤ d ≤ 0.5, and 0.01 ≤ e ≤ 0.1.

**Chemical Formula 13** LiₐNiG_{b}O₂

In Formula 13, 0.90 ≤ a ≤ 1.1, and 0.001 ≤ b ≤ 0.1.

**Chemical Formula 14** LiₐCoG_{b}O₂

In Formula 14, 0.90 ≤ a ≤ 1.1, and 0.001 ≤ b ≤ 0.1.

**Chemical Formula 15** LiₐMnG_{b}O₂

In Formula 15, 0.90 ≤ a ≤ 1.1, and 0.001 ≤ b ≤ 0.1.

**Chemical Formula 16** LiₐMn₂G_{b}O₄

In Formula 16, 0.90 ≤ a ≤ 1.1, and 0.001 ≤ b ≤ 0.1.

**Chemical Formula 17** QO₂

**Chemical Formula 18** QS₂

**Chemical Formula 19** LiQS₂

**Chemical Formula 20** V₂O₅

**Chemical Formula 21** LiV₂O₅

**Chemical Formula 22** LiIO₂

**Chemical Formula 23** LiNiVO₄

**Chemical Formula 24** Li_{3-f}J₂(PO₄)₃

In Formula 24, 0 ≤ f ≤ 3.

**Chemical Formula 25** Li _{3-f}Fe₂(PO₄)₃

In Formula 25, 0 ≤ f ≤ 2.

In Formulas 2 to 25, A is selected from Ni, Co, Mn, and combinations thereof. B is selected from Al, Ni, Co, Mn, Cr, Fe, Mg, Sr, V, rare earth elements, and combinations thereof. D is selected from O, F, S, P, and combinations thereof. E is selected from Co, Mn, and combinations thereof. F is selected from F, S, P, and combinations thereof. G is selected from Al, Cr, Mn, Fe, Mg, La, Ce, Sr, V, lanthanide elements, and combinations thereof. Q is selected from Ti, Mo, Mn, and combinations thereof. I is selected from Cr, V, Fe, Sc, Y, and combinations thereof. J is selected from V, Cr, Mn, Co, Ni, Cu, and combinations thereof.

The positive active material may be selected from elemental sulfur (S₈), sulfur-based compounds (such as Li₂Sₙ (where n≥1) and Li₂Sₙ (where n≥1)) dissolved in a catholyte, organic sulfur compounds, and carbon-sulfur polymers (such as (C₂S_{f})ₙ, where f ranges from 2.5 to 50 and n≥2).

The positive electrode may also include a binder to improve adherence of the positive active material layer to the current collector. The positive active material may also include a conductive material to improve electrical conductivity.

Nonlimiting examples of suitable binders include polyvinyl alcohol, carboxymethyl cellulose, hydroxypropylene cellulose, diacetylene cellulose, polyvinylchloride, carboxylated polyvinylchloride, polyvinyldifluoride, ethylene oxide-containing polymers, polyvinylpyrrolidone, polyurethane, polytetrafluoroethylene, polyvinylidene fluoride, polyethylene, polypropylene, styrene-butadiene rubbers, acrylated styrene-butadiene rubbers, epoxy resins, and polyamide.

Any electrically conductive material can be used as the conductive material so long as it does not cause a chemical change. Nonlimiting examples of suitable conductive materials include natural graphite, artificial graphite, carbon black, acetylene black, ketjen black, carbon fibers, polyphenylene derivatives, metal powders and metal fibers including copper, nickel, aluminum, silver, and so on.

The positive electrode can be fabricated by mixing a positive active material, a binder, and optionally a conductive agent in a solvent to form a composition which is then applied on a positive current collector such as aluminum.

The positive current collector may be selected from aluminum foils, nickel foils, stainless steel foils, titanium foils, nickel foams, aluminum foams, polymer substrates coated with conductive metals, and combinations thereof. According to one embodiment, the positive current collector is an aluminum foil.

In a rechargeable battery according to one embodiment of the present invention, the electrolyte may be a non-aqueous electrolyte or a solid electrolyte.

The non-aqueous electrolyte may include a lithium salt dissolved in a non-aqueous organic solvent. The lithium salt act as a lithium-ion source, helping basic battery operation. Nonlimiting examples of suitable lithium salts include LiPF₆, LiBF₄, LiSbF₆, LiAsF₆, LiClO₄, LiCF₃SO₃, LiC₄F₉SO₃, LiN(CF₃SO₂)₂, LiN(C₂F₅SO₂)₂, LiAlO₂, LiAlCl₄, LiN(CₚF₂ₚ₊₁SO₂)(C_{q}F_{2q+1}SO₂) (wherein p and q are natural numbers), LiCl, Lil, and LiB(C₂O₄)₂. According to one embodiment, the lithium salt is LiBF₄. According to another embodiment, the lithium salt is either LiPF₆ or LiBF₄.

The lithium salt may be present in the electrolyte in a concentration ranging from 0.6 to 2.0M. According to one embodiment, the lithium salt is present in a concentration ranging from 0.7 to 1.6 M. When the lithium salt concentration is below 0.6M, electrolyte performance may deteriorate due to low electrolyte conductivity. When the lithium salt concentration is greater than 2.0M, lithium ion mobility may decrease due to increased electrolyte viscosity.

The non-aqueous organic solvent acts as a medium for transmitting the ions taking part in the electrochemical reaction of the battery. The non-aqueous organic solvent may include a carbonate-based, ester-based, ether-based, ketone-based, alcohol-based, or aprotic solvent. Nonlimiting examples of suitable carbonate-based solvents include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and so on. Nonlimiting examples of suitable ester-based solvents include n-methyl acetate, n-ethyl acetate, n-propyl acetate, dimethylacetate, methylpropionate, ethylpropionate, γ-butyrolactone, decanolide, valerolactone, mevalonolactone, caprolactone, and so on. Nonlimiting examples of suitable ether-based solvents include dibutyl ether, tetraglyme, diglyme, dimethoxyethane, 2-methyltetrahydrofuran, tetrahydrofuran, and so on. Nonlimiting examples of suitable ketone-based solvents include cyclohexanone, and so on. Nonlimiting examples of suitable alcohol-based solvents include ethanol, isopropyl alcohol, and so on. Nonlimiting examples of suitable aprotic solvents include nitriles (such as X-CN, where X is a C₂ to C₂₀ linear, branched, or cyclic hydrocarbon, a double bond, an aromatic ring, or an ether bond), amides (such as dimethylformamide), dioxolanes (such as 1,3-dioxolane), sulfolane, and so on.

The non-aqueous organic solvent may be a single solvent or a mixture of solvents. When the organic solvent includes a mixture, the mixture ratio can be controlled according to the desired battery performance.

In one embodiment, a carbonate-based solvent may include a mixture of a cyclic carbonate and a linear carbonate. The cyclic carbonate and the linear carbonate may be mixed together in a volume ratio ranging from 1:1 to 1:9. When such a mixture is used as an electrolyte, electrolyte performance may be enhanced. According to one embodiment, the cyclic carbonate and the linear carbonate are mixed together in a volume ratio ranging from 1:1 to 1:3. In another embodiment, the cyclic carbonate and linear carbonate are mixed in a volume ratio ranging from 1:3 to 1:5. In yet another embodiment, the cyclic carbonate and linear carbonate are mixed in a volume ratio ranging from 1:5 to 1:7. In still another embodiment, the cyclic carbonate and linear carbonate are mixed in a volume ratio ranging from 1:7 to 1:9. According to one embodiment, the cyclic carbonate and linear carbonate are mixed in a volume ratio ranging from 1:1 to 1:5.

In addition, the electrolyte according to one embodiment of the present invention may further include mixtures of carbonate-based solvents and aromatic hydrocarbon-based solvents. The carbonate-based solvents and the aromatic hydrocarbon-based solvents may be mixed in a volume ratio ranging from 1:1 to 30:1. According to one embodiment, the carbonate-based solvents and the aromatic hydrocarbon-based solvents are mixed in a volume ratio ranging from 1:1 to 10:1. In another embodiment, the carbonate-based solvent and aromatic hydrocarbon-based solvent are mixed in a volume ratio ranging from 10:1 to 20:1. In yet another embodiment, the carbonate-based solvent and aromatic hydrocarbon-based solvent are mixed in a volume ratio ranging from 20:1 to 30:1. According to one embodiment, the carbonate-based solvent and the aromatic hydrocarbon-based solvent are mixed in a volume ratio ranging from 1:1 to 5:1, or from 5:1 to 10:1.

The aromatic hydrocarbon-based organic solvent may be represented by Formula 26. 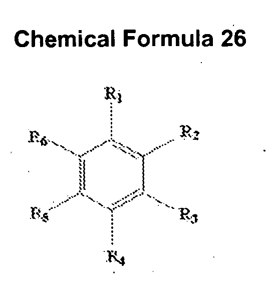 In Formula 26, each of R₁ through R₆ is independently selected from hydrogen, halogens, C1 to C10 alkyls, haloalkyls, and combinations thereof.

Nonlimiting examples of suitable aromatic hydrocarbon-based organic solvents include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and combinations thereof.

The non-aqueous electrolyte may further include at least one overcharge inhibition additive selected from vinylene carbonate, divinylsulfone, ethylene sulfite, thioacetic acid phenylester compounds (such as thioacetic acid S-phenyl ester and thioacetic acid O-phenyl ester), chroman-based compounds (such as 6-fluoro-chroman), and carbonate-based compounds having a substituent selected from halogens, cyano (CN) groups and nitro (NO₂) groups. The additive imparts improved safety when batteries are stored at high temperatures. This results in improvements in the electrochemical characteristics of batteries such as swelling inhibition, capacity, cycle-life, and low temperature characteristics. In one embodiment, the additive is a carbonate-based compound. According to one embodiment, the additive is an ethylene carbonate additive represented by Formula 27 below. According to another embodiment, the additive is fluoroethylene carbonate. 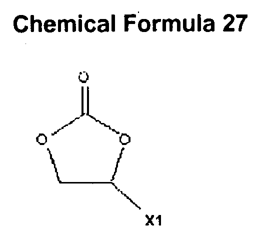 In Formula 27, X1 is selected from halogens, cyano (CN) groups and nitro (NO₂) groups.

The overcharge inhibition additive can be added in an amount ranging from 0.1 to 10 wt% based on the total weight of the electrolyte. According to one embodiment, the overcharge inhibition additive can be added in an amount ranging from 0.1 to 1 wt% based on the total weight of the electrolyte. In another embodiment, the overcharge inhibition additive can be added in an amount ranging from 1 to 5 wt% based on the total weight of the electrolyte. In yet another embodiment, the overcharge inhibition additive can be added in an amount ranging from 5 to 10 wt% based on the total weight of the electrolyte. According to one embodiment, the overcharge inhibition additive can be added in an amount ranging from 3 to 5 wt% based on the total weight of the electrolyte. When the amount of the overcharge inhibition additive is less than 0.1 wt%, the effect of the additive is negligible. When the amount of the additive is greater than 10 wt%, cycle-life problems may occur on charge and discharge.

The solid electrolyte may be a polymer electrolyte including polyethylene oxide. Alternatively, the polymer electrolyte may include at least one polyorganosiloxane side chain or polyoxyalkylene side chain. In another embodiment, the polymer electrolyte may be a sulfide electrolyte (such as Li₂S-SiS₂, Li₂S-GeS₂, Li₂S-P₂S₅, Li₂S-B₂S₃, and the like). In yet another embodiment, the polymer electrolyte may be an inorganic compound electrolyte (such as Li₂S-SiS₂-Li₃PO₄, Li₂S-SiS₂-Li₃SO₄, and the like).

The rechargeable lithium battery generally also includes a separator between the positive electrode and the negative electrode. The separator may include polyethylene, polypropylene, polyvinylidene fluoride, and multi-layers thereof, such as a polyethylene/polypropylene double-layered separator, a polyethylene/polypropylene/polyethylene triple-layered separator, and a polypropylene/polyethylene/polypropylene triple-layered separator.

The following examples illustrate certain aspects of the present invention. These examples, however, are presented for illustrative purposes only and are not to be interpreted as limiting the scope of the present invention.

### Example 1: Preparation of a Negative Active Material

V₂O₅, Li₂CO₃, and MoO₃ were weighed to obtain a ratio of Li:V:Mo of 1.08:0.9:0.02. These materials were then dispersed in distilled water to prepare an active material composition. The metal salts were completely dissolved to produce an orange solution. Subsequently, a chelating agent solution was prepared by adding a polyvinyl alcohol chelating agent in a molar amount twice that of the total metal ions.

The metal salt solution and the chelating agent solution were mixed and then heated at 200°C to evaporate water and obtain a precursor. The precursor was heated at 1000°C for 12 hours under a nitrogen atmosphere to prepare a negative active material for a rechargeable lithium battery. The negative active material included primary particles having an average particle diameter of 5µm and secondary particles having an average particle diameter of 20µm.

### Comparative Example 1: Preparation of a Negative Active Material

V₂O₅, Li₂CO₃, and MoO₃ were mixed in a solid-phase to ratio of Li:V:Mo of 1:0.95:0.05. The mixture was heated at 1000°C for 10 hours under a nitrogen atmosphere followed by cooling to room temperature. The resulting product was sieved to obtain a negative active material having an average particle diameter of 30µm.

### Comparative Example 2: Preparation of a Negative Active Material

V₂O₅, Li₂CO₃, and MoO₃ were weighed to achieve a ratio of Li:V:Mo of 1.08:0.9:0.02. These materials were dispersed in distilled water to prepare an active material composition. The metal salts were completely dissolved to produce an orange solution. Subsequently, a chelating agent solution was prepared by adding a polyvinyl alcohol chelating agent in a molar amount 0.1 times that of the total metal ions.

The metal salt solution and the chelating agent solution were mixed and then heated at 200°C to evaporate water and obtain a precursor. The precursor was heated at 1000°C for 12 hours under a nitrogen atmosphere to prepare a negative active material for a rechargeable lithium battery having an average particle diameter of 50µm.

### Comparative Example 3: Preparation of a Negative Active Material

V₂O₅, Li₂CO₃, and MoO₃ were weighed to achieve a ratio of Li:V:Mo of 1.08:0.9:0.02. These materials were dispersed in distilled water to prepare an active material composition. The metal salts were completely dissolved to produce an orange solution. Subsequently, a chelating agent solution was prepared by adding a polyvinyl alcohol chelating agent in a molar amount twice that of the total metal ions.

The metal salt solution and the chelating agent solution were mixed and then heated at 200°C to evaporate water and obtain a precursor. The resulting precursor was heated at 500°C for 12 hours under a nitrogen atmosphere to obtain a negative active material for a rechargeable lithium battery having an average particle diameter of 40µm.

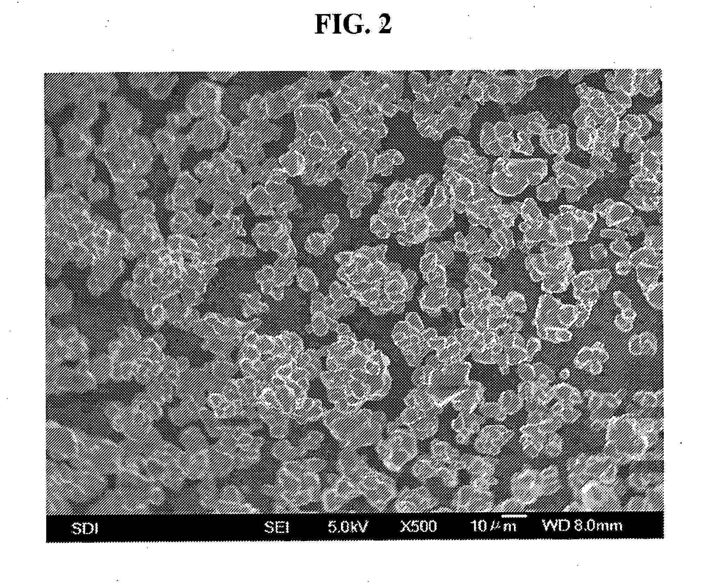

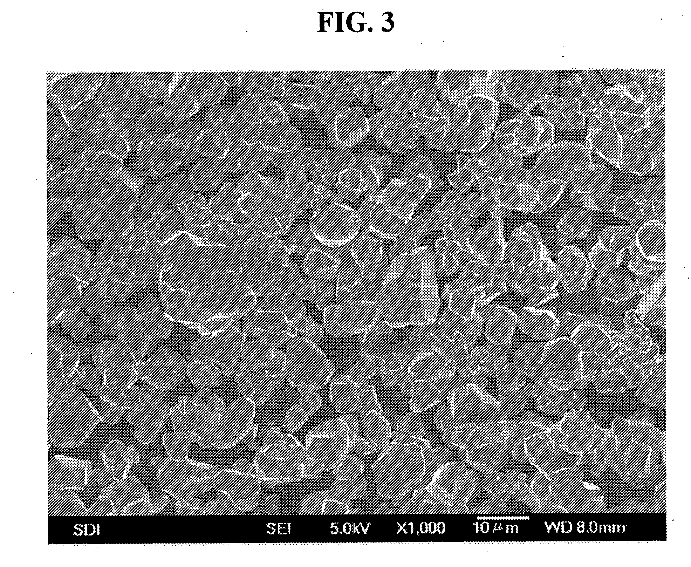

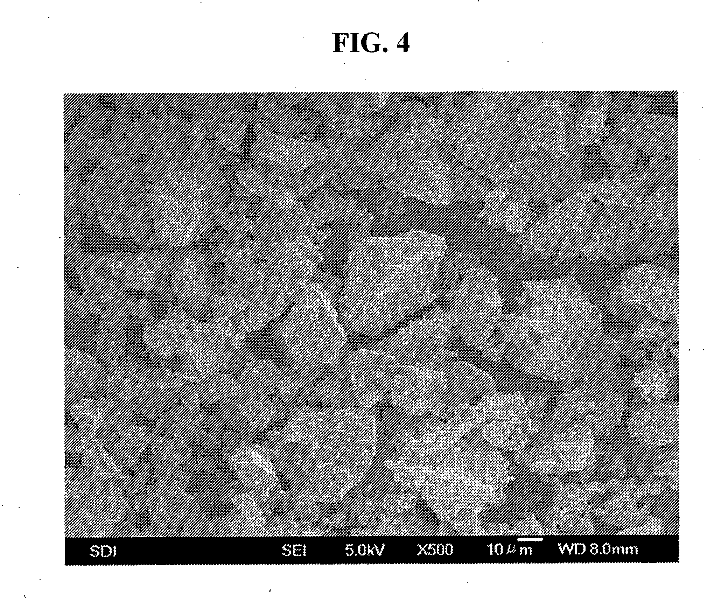

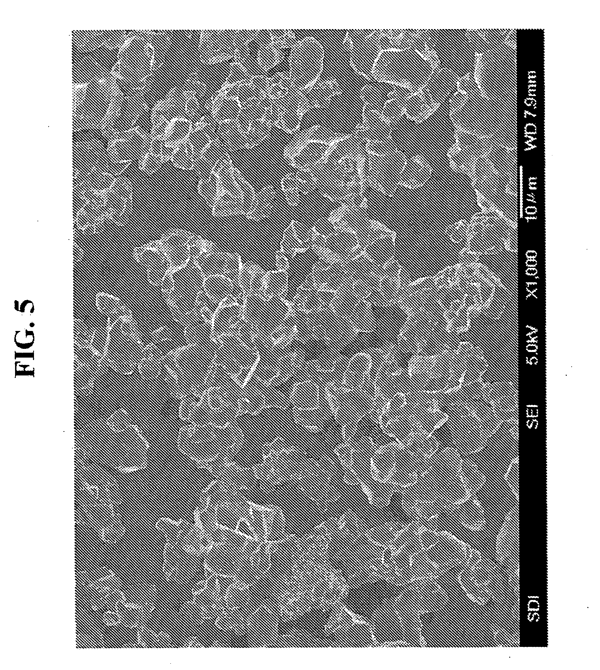

Scanning electron microscope ("SEM")photographs of the negative active materials according to Example 1 and Comparative Examples 1 to 3 are shown in FIGs. 2 through 5, respectively. Specifically, FIG. 2 is a SEM photograph of the negative active material prepared according to Example 1, FIG. 3 is a SEM photograph of the negative active material prepared according to Comparative Example 1, FIG. 4 is a SEM photograph of the negative active material prepared according to Comparative Example 2, and FIG. 5 is a SEM photograph of the negative active material prepared according to Comparative Example 3.

As shown in FIG. 2, the active material prepared according to Example 1 includes secondary particles including assemblies of primary particles. On the contrary, the active materials prepared according to Comparative Examples 1 through 3 include only primary particles.

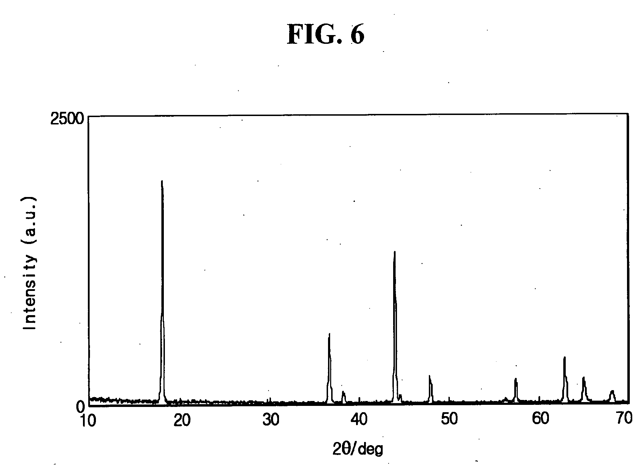

The structures of the negative active materials according to Example 1 and Comparative Examples 1-3 were analyzed using X-ray diffraction. The results are shown in FIGs. 6 through 9. The X-ray diffraction analysis was performed using a CuKα X-ray (1.5418A, 40kV/30mA) at a scanning rate of 0.02°/second within a 2θ range of 10-80°.

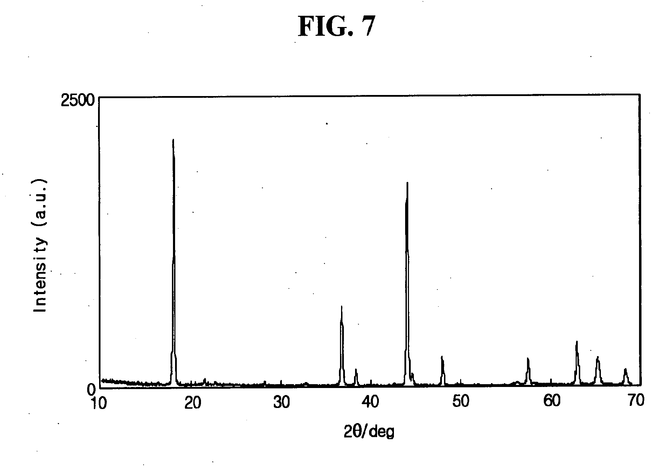

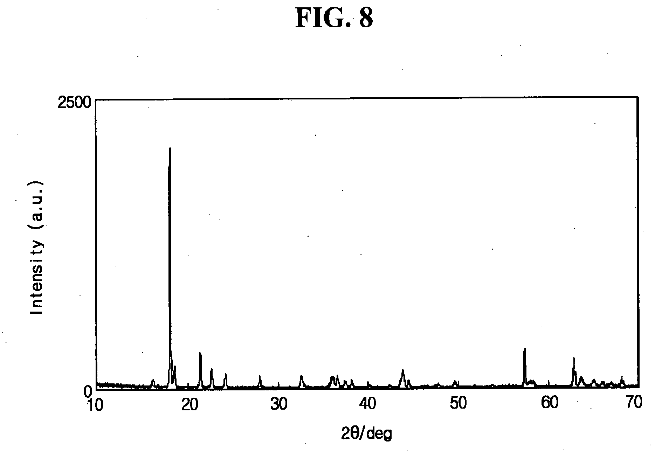

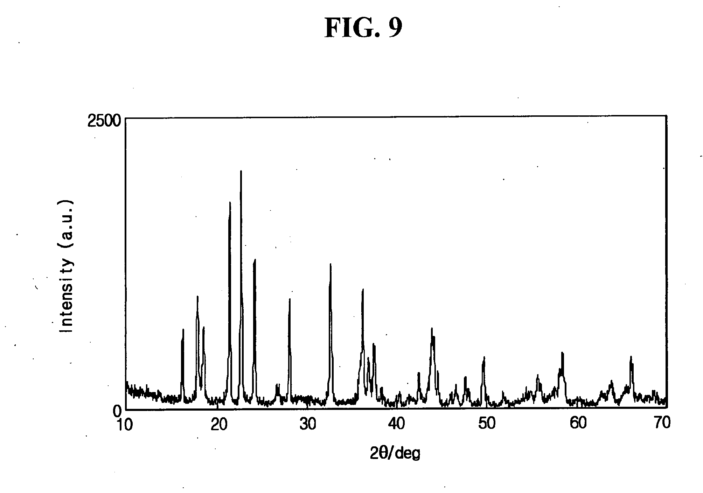

FIG. 6 shows the results of the X-ray diffraction analysis of the negative active materials prepared according to Example 1. FIG. 7 shows the results of the X-ray diffraction analysis of the negative active materials prepared according to Comparative Example 1. FIG. 8 shows the results of the X-ray diffraction analysis of the negative active materials prepared according to Comparative Example 2. FIG. 9 shows the results of the X-ray diffraction analysis of the negative active materials prepared according to Comparative Example 3. As shown in FIGs. 6 through 9, the active materials prepared according to Example 1 showed (003) plane peaks at 2θ value of 18 degrees. These results indicate that the active materials prepared according to Example 1 have a layered structure.

### Fabrication of a Test Cell

The negative active materials prepared according to Example 1 and Comparative Examples 1 through 3 were each mixed with graphite to a ratio of 3/7. The resulting mixtures were mixed with polyvinylidene fluoride to a ratio of 96:4 in N-methyl pyrrolidone to prepare negative electrode slurries.

Each negative electrode slurry was coated on copper foil to a thickness of 80µm, dried at 135°C for 3 hours or more, and then compressed to fabricate a 45µm-thick negative electrode.

2016 coin-type half cells were prepared using the negative electrodes as working electrodes, lithium metal foil as the counter electrodes, and porous polypropylene film as the separators between the working electrodes and counter electrodes. 1 mol/L LiPF₆ dissolved in a mixed solvent of propylene carbonate (PC), diethyl carbonate (DEC), and ethylene carbonate (EC) was used as the electrolyte.

The electrical characteristics of the cells including the active materials prepared according to Example 1 and Comparative Examples 1 through 3 were evaluated.

Each cell was charged and discharged within a voltage of 0.01 to 2.0 V at a constant current of 0.2C for one charge and discharge cycle. Each cell was then charged within a voltage of 0.01 to 1.0 V at a constant current of 0.2C for one charge and discharge cycle. Each cell was then charged within a voltage of 0.01 to 1.0 V at a constant current of 1C for 50 charge and discharge cycles. Initial capacity, initial efficiency, and cycle-life characteristics were measured. The measurement results are reported in Table 1 below. The cycle-life characteristics are reported as percent ratios obtained by dividing the 50th discharge capacity by the initial discharge capacity.

**Table 1**

| | Initial Charge Capacity [mAh/g] | Initial Discharge Capacity [mAh/g] | Initial Efficiency [%] | Cycle-life (50th/1^{st}) [%] |
|---|---|---|---|---|
| Example 1 | 335 | 305 | 92 | 85 |
| Comparative Example 1 | 330 | 283 | 86 | 65 |
| Comparative Example 2 | 288 | 230 | 80 | 42 |
| Comparative Example 3 | 318 | 227 | 71 | 25 |

As shown in Table 1, the cells including the negative active materials prepared according to Example 1 showed improved initial capacity and efficiency, as well as improved charge and discharge efficiency and cycle-life characteristics compared to those prepared according to Comparative Examples 1 through 3.

### Example 2

A negative electrode slurry was prepared by mixing the negative active material prepared according to Example 1 with a solution of polytetrafluoroethylene dissolved in N-methyl pyrrolidone. The negative electrode slurry was coated on a 14µm-thick copper foil using a doctor blade, dried at 120°C for 24 hours under a vacuum atmosphere to evaporate the N-methyl-pyrrolidone, and then compressed to fabricate a negative electrode.

A lithium manganese oxide (LiMn₂O₄) positive active material and natural graphite as a conductive agent were mixed to form a mixture. A polyvinylidene fluoride binder was dissolved in an N-methyl pyrrolidone solvent to prepare a binder solution. The mixture was added to the binder solution to fabricate a positive electrode slurry. The positive electrode slurry was coated on a 20µm -thick aluminum foil using a doctor blade, dried at 120°C for 24 hours under a vacuum atmosphere to evaporate the N-methyl pyrrolidone, and then compressed to fabricate a positive electrode.

The fabricated electrodes and a 25µm-thick polyethylene/polypropylene double-layered separator were spiral-wound and compressed. An electrolyte solution was then injected to fabricate a 18650 cylindrical battery cell. 1 mol/L LiPF₆ dissolved in a mixed solvent of propylene carbonate (PC), diethyl carbonate (DEC), and ethylene carbonate (EC) was used as the electrolyte.

### Example 3

A negative active material was prepared as in Example 1 except that instead of MoO₃, Al₂O₃ was used in an amount sufficient to obtain a ratio of Li:V:Al of 1.1:0.97:0.03. Polyethylene glycol was used as the chelating agent in a molar amount might 0.25 times that of the total metal ions. The prepared negative active material included primary particles having an average particle diameter of 0.1µm, and secondary particles having an average particle diameter of 2µm.

The negative active material was mixed with polytetrafluoroethylene dissolved in N-methyl pyrrolidone to prepare a negative electrode slurry. The negative electrode slurry was coated on a 14µm-thick copper foil using a doctor blade, dried at 120°C for 24 hours under a vacuum atmosphere to evaporate the N-methyl pyrrolidone, and then compressed to fabricate a negative electrode.

A lithium manganese oxide (LiMn₂O₄) positive active material and natural graphite as a conductive agent were mixed to form a mixture. A polyvinylidene fluoride binder was dissolved in an N-methyl pyrrolidone solvent to prepare a binder solution. The mixture was added to the binder solution to fabricate a positive electrode slurry. The positive electrode slurry was coated on a 20µm -thick aluminum foil using a doctor blade, dried at 120°C for 24 hours under a vacuum atmosphere to evaporate the N-methyl pyrrolidone, and then compressed to fabricate a positive electrode.

The fabricated electrodes and a 25µm-thick polyethylene/polypropylene double-layered separator were spiral-wound and compressed. An electrolyte solution was then injected to fabricate a 18650 cylindrical battery cell. 0.6M LiN(C₂F₅SO₂)₂ and 1wt% of nitrocarbonate dissolved in a mixed solvent of propylene carbonate/ethylpropyl carbonate (in a volume ratio of 1:1) and xylene in a volume ratio of 1:1 was used as the electrolyte.

### Example 4

A negative active material was prepared as in Example 1 except that instead of MoO₃, Cr₂O₃ was used in an amount sufficient to obtain a ratio of Li:V:Cr of 1.12:0.85:0.05. Poly(meth)acrylic acid was used as a chelating agent in a molar amount 10 times that of the total metal ions. The prepared negative active material included primary particles having an average particle diameter of 10µm, and secondary particles having an average particle diameter of 50µm.

The negative active material was mixed with polyvinylidene fluoride dissolved in N-methyl pyrrolidone to prepare a negative electrode slurry. The negative electrode slurry was coated on a 14 µm-thick copper foil using a doctor blade, dried at 120°C for 24 hours under a vacuum atmosphere to evaporate the N-methyl pyrrolidone, and then compressed to fabricate a negative electrode.

A LiNi_{0.9}Co_{0.1}Sr_{0.002}O₂ positive active material and carbon fiber as a conductive agent were mixed to form a mixture. A polyvinylidene fluoride binder was dissolved in an N-methyl pyrrolidone solvent to prepare a binder solution. The mixture was added to the binder solution to fabricate a positive electrode slurry. The positive electrode slurry was coated on a 20µm -thick aluminum foil using a doctor blade, dried at 120°C for 24 hours under a vacuum atmosphere to evaporate the N-methyl pyrrolidone, and then compressed to fabricate a positive electrode

The fabricated electrodes and a 25µm-thick polyethylene/polypropylene double-layered separator were spiral-wound and compressed. An electrolyte solution was then injected to fabricate a 18650 cylindrical battery cell. 2.0M LiBF₄ and 10wt% of divinylsulfone dissolved in a mixed solvent of butylene carbonate/ethylpropyl carbonate (in a volume ratio of 1:9) and 1,3-diiodobenzene in a volume ratio of 30:1 was used as the electrolyte.

### Example 5

A negative active material was prepared as in Example 1 except that instead of MoO₃, TiO₂was used in an amount sufficient to obtain a ratio of Li:V:Ti of 1.1:0.89:0.01. Polyvinylbutyral was used as a chelating agent in a molar amount equal to that of the total metal ions. The prepared negative active material included primary particles having an average particle diameter of 0.5µm, and secondary particles having an average particle diameter of 15µm.

The negative active material was mixed with polyvinylidene fluoride dissolved in N-methyl pyrrolidone to prepare a negative electrode slurry. The negative electrode slurry was coated on a 14µm-thick copper foil using a doctor blade, dried at 120°C for 24 hours under a vacuum atmosphere to evaporate the N-methyl pyrrolidone, and then compressed to fabricate a negative electrode.

A LiMn₂O₄ positive active material and carbon black as a conductive agent were mixed to form a mixture. A polyvinylidene fluoride binder was dissolved in an N-methyl pyrrolidone solvent to prepare a binder solution. The mixture was added to the binder solution to fabricate a positive electrode slurry. The positive electrode slurry was coated on a 20µm -thick aluminum foil using a doctor blade, dried at 120°C for 24 hours under a vacuum atmosphere to evaporate the N-methyl pyrrolidone, and then compressed to fabricate a positive electrode.

The fabricated electrodes and a 25µm-thick polyethylene separator were spiral-wound and compressed. An electrolyte solution was then injected to fabricate a 18650 cylindrical battery cell. 0.7M LiCF₃SO₃ and 5wt% of thioacetic acid S-phenyl ester dissolved in a mixed solvent of ethylene carbonate/dimethyl carbonate (in a volume ratio of 1:3) and fluorobenzene in a volume ratio of 10:1 was used as the electrolyte.

### Example 6

A negative active material was prepared as in Example 1 except that instead of MoO₃, WO₃ was used in an amount sufficient to obtain a ratio of Li:V:W of 1.05:0.88:0.02. Glycine was used as a chelating agent in a molar amount 5 times that of the total metal ions. The prepared negative active material included primary particles having an average particle diameter of 2µm, and secondary particles having an average particle diameter of 20µm.

The negative active material was mixed with polyvinylidene fluoride dissolved in N-methyl pyrrolidone to prepare a negative electrode slurry. The negative electrode slurry was coated on a 14µm-thick copper foil using a doctor blade, dried at 120°C for 24 hours under a vacuum atmosphere to evaporate the N-methyl pyrrolidone, and then compressed to fabricate a negative electrode.

A LiMn₂O₄ positive active material and copper powder as a conductive agent were mixed to form a mixture. A polyvinylidene fluoride binder was dissolved in an N-methyl pyrrolidone solvent to prepare a binder solution. The mixture was added to the binder solution to fabricate a positive electrode slurry. The positive electrode slurry was coated on a 20µm -thick aluminum foil using a doctor blade, dried at 120°C for 24 hours under a vacuum atmosphere to evaporate the N-methyl pyrrolidone, and then compressed to fabricate a positive electrode

The fabricated electrodes and a 25µm-thick polyethylene separator were spiral-wound and compressed. An electrolyte solution was then injected to fabricate a 18650 cylindrical battery cell. 1.6M LiPF₆ and 2wt% of ethylene sulfite dissolved in a mixed non-aqueous organic solvent of ethylene carbonate/dimethyl carbonate (in a volume ratio of 1:5) and xylene in a volume ratio of 20:1 was used as the electrolyte.

### Example 7

A negative active material was prepared as in Example 1 except that instead of MoO₃, ZrO₂was used in an amount sufficient to obtain a ratio of Li:V:Zr of 1.1:0.9:0.03. Polyvinyl alcohol was used as a chelating agent in a molar amount twice that of the total metal ions. The prepared negative active material included primary particles having an average particle diameter of 4µm, and secondary particles having an average particle diameter of 30µm.

The negative active material was mixed with polyvinylidene fluoride dissolved in N-methyl pyrrolidone to prepare a negative electrode slurry. The negative electrode slurry was coated on a 14µm-thick copper foil using a doctor blade, dried at 120°C for 24 hours under a vacuum atmosphere to evaporate the N-methyl pyrrolidone, and then compressed to fabricate a negative electrode.

A LiMn₂O₄ positive active material and acetylene black as a conductive agent were mixed to form a mixture. A polyvinylidene fluoride binder was dissolved in an N-methyl pyrrolidone solvent to prepare a binder solution. The mixture was added to the binder solution to fabricate a positive electrode slurry. The positive electrode slurry was coated on a 20µm -thick aluminum foil using a doctor blade, dried at 120°C for 24 hours under a vacuum atmosphere to evaporate the N-methyl pyrrolidone, and then compressed to fabricate a positive electrode

The fabricated electrodes and a 25µm-thick polyethylene separator were spiral-wound and compressed. An electrolyte solution was then injected to fabricate a 18650 cylindrical battery cell. 1.0M LiPF₆ and 8 wt% of 6-fluoro-chroman dissolved in a non-aqueous organic mixed solvent of ethylene carbonate/dimethyl carbonate (in a volume ratio of 1:7) and fluorobenzene in a volume ratio of 15:1 was used as the electrolyte.

### Example 8

A negative active material was prepared as in Example 1 except that instead of MoO₃, both TiO₂ and MoO₃ were used in amounts sufficient to obtain a ratio of Li:V:Ti:Mo of 1.1:0.84:0.03:0.03. Polyvinyl alcohol was used as a chelating agent in a molar amount twice that of the total metal ions. The prepared negative active material included primary particles having an average particle diameter of 6µm, and secondary particles having an average particle diameter of 40µm.

The negative active material was mixed with polyvinylidene fluoride dissolved in N-methyl pyrrolidone to prepare a negative electrode slurry. The negative electrode slurry was coated on a 14µm-thick copper foil using a doctor blade, dried at 120°C for 24 hours under a vacuum atmosphere to evaporate the N-methyl pyrrolidone, and then compressed to fabricate a negative electrode.

A LiMn₂O₄ positive active material and artificial graphite as a conductive agent were mixed to form a mixture. A polyvinylidene fluoride binder was dissolved in a N-methyl pyrrolidone solvent to prepare a binder solution. The mixture was added to the binder solution to fabricate a positive electrode slurry. The positive electrode slurry was coated on a 20µm -thick aluminum foil using a doctor blade, dried at 120°C for 24 hours under a vacuum atmosphere to evaporate the N-methyl pyrrolidone, and then compressed to fabricate a positive electrode.

The fabricated electrodes and a 25µm-thick polyethylene separator were spiral-wound and compressed. An electrolyte solution was then injected to fabricate a 18650 cylindrical battery cell. 1.5M LiPF₆ and 4wt% of vinylene carbonate dissolved in a mixed non-aqueous organic solvent of ethylene carbonate/dimethyl carbonate (in a volume ratio of 1:5) and fluorobenzene in a volume ratio of 25:1 was used as the electrolyte.

### Comparative Example 4

V₂O₅, Li₂CO₃, and MoO₃ were weighed to obtain a ratio of Li:V:Mo of 1.08:0.9:0.02. These materials were then dispersed in distilled water to prepare an active material composition. The metal salts were completely dissolved to produce an orange solution. Subsequently, a chelating agent solution was prepared using polyvinyl alcohol as a chelating agent in a molar amount of 0.1 moles based on 1 mole of the total metal ions.

The metal salt solution and chelating agent solution were mixed and then heated at 200°C to evaporate water and obtain a precursor. The precursor was heated at 600°C for 12 hours under a nitrogen atmosphere to obtain a negative active material for a rechargeable lithium battery. The prepared negative active material included primary particles having an average particle diameter of 0.05µm, and secondary particles having an average particle diameter of 1µm.

A rechargeable lithium battery cell was fabricated as in Example 2 using the negative active materials prepared according to Comparative Example 4.

### Comparative Example 5

V₂O₅, Li₂CO₃, and MoO₃were weighed to obtain a ratio of Li:V:Mo of 1.08:0.9:0.02. These materials were then dispersed in distilled water to prepare an active material composition. The metal salts were completely dissolved to produce an orange solution.

Subsequently, a chelating agent solution was prepared using polyvinyl alcohol as a chelating agent in a molar amount of 12 moles based on 1 mole of the total metal ions.

The metal salt solution and chelating agent solution were mixed and then heated at 200°C to evaporate water and obtain a precursor. The precursor was heated at 1000°C for 12 hours under a nitrogen atmosphere to prepare a negative active material for a rechargeable lithium battery. The prepared negative active material included primary particles having an average particle diameter of 2.5µm, and secondary particles having an average particle diameter of 55µm.

A rechargeable lithium battery cell was fabricated as in Example 2 using the negative active material prepared according to Comparative Example 5.

The cycle-life characteristics of the cells prepared according to Examples 2 through 8 and Comparative Examples 4 and 5 were evaluated. The cycle-life evaluation was performed as described above with respect to Example 1 and Comparative Examples 1 through 3. The measurement results are reported in Table 2 below. The cycle-life characteristics are reported as percent ratios obtained by dividing the 50th discharge capacity by the initial discharge capacity.

**Table 2**

| | Initial Charge Capacity [mAh/g] | Initial Discharge Capacity [mAh/g] | Initial Efficiency [%] | Cycle-life (50th/1^{st}) [%] |
|---|---|---|---|---|
| Example 2 | 345 | 307 | 89 | 91 |
| Example 3 | 338 | 306 | 91 | 88 |
| Example 4 | 348 | 312 | 90 | 86 |
| Example 5 | 351 | 315 | 90 | 90 |
| Example 6 | 335 | 303 | 90 | 87 |
| Example 7 | 341 | 300 | 88 | 83 |
| Example 8 | 336 | 301 | 90 | 84 |
| Comparative Example 4 | 302 | 252 | 83 | 38 |
| Comparative Example 5 | 311 | 246 | 79 | 41 |

As shown in Table 2, the cells prepared according to Examples 2 through 8 showed significantly better battery characteristics than those according to Comparative Examples 4 and 5 (which included active materials with particle diameters outside the ranges of the present invention).

The negative active materials for rechargeable lithium batteries according to the present invention provide rechargeable lithium batteries having excellent cycle-life characteristics.

## Claims

1. A negative active material for a rechargeable lithium battery comprising:
secondary particles comprising assemblies of primary particles, wherein the primary particles comprise a compound represented by Formula 1:
Formula 1 LiₓM_{y}V_{z}O_{2+d}
wherein, 0.1 ≤ x ≤ 2.5, 0 ≤ y ≤ 0.5, 0.5 ≤ z ≤ 1.5, 0 ≤ d ≤ 0.5, and M is a metal selected from the group consisting of Al, Cr, Mo, Ti, W, Zr, and combinations thereof.

2. The negative active material of claim 1, wherein M is selected from the group consisting of Mo and W.

3. The negative active material of any of claims 1 or 2, wherein the primary particles have an average particle diameter ranging from 0.1 to 10µm.

4. The negative active material of any of the preceding claims, wherein the primary particles have a layered structure.

5. The negative active material of any of the preceding claims, wherein the secondary particles have an average particle diameter ranging from 2 to 50µm.

6. A method of preparing a negative active material for a rechargeable lithium battery according to claim 1, the method comprising the steps of:
dissolving a vanadium source material, a lithium source material, and a M source material in a solvent to form a composition, wherein M is selected from the group consisting of Al, Cr, Mo, Ti, W, Zr, and combinations thereof;
adding a chelating agent to the composition to prepare a gel;
drying the gel to prepare an organic-inorganic precursor; and
subjecting the organic-inorganic precursor to heat treatment at a temperature ranging from 800 to 1200°C.

7. The method of claim 6, wherein the vanadium source material is selected from the group consisting of vanadium metal, VO, V₂O₃, V₂O₄, V₂O₅, V₄O₇, VOSO_{4·}H₂O, NH₄VO₃, and mixtures thereof.

8. The method of any of claims 6 or 7, wherein the lithium source material is selected from the group consisting of lithium carbonates, lithium hydroxides, lithium nitrates, lithium acetates, and mixtures thereof.

9. The method of any of claims 6 to 8, wherein the M source material is selected from the group consisting of M-containing oxides, M-containing hydroxides, and mixtures thereof.

10. The method of any of claims 6 to 9, wherein the chelating agent is selected from the group consisting of polyvinyl alcohol, polyalkylene glycols, poly(meth)acrylic acids, polyvinylbutyral, carboxylic acid, and mixtures thereof.

11. The method of any of claims 6 to 10, wherein the drying is performed at a temperature ranging from 100 to 400°C.

12. The method of any of claims 6 to 11, wherein the heat treatment is performed under a nitrogen atmosphere.

13. A negative electrode for a rechargeable lithium battery comprising:
a negative active material according to any of claims 1 to 5.

14. A rechargeable lithium battery comprising:
a negative electrode according to claim 13.

## Patentansprüche

1. Ein negatives aktives Material für eine wiederaufladbare Lithium-Batterie, umfassend:
Sekundärpartikel, die Anordnungen von Primärpartikeln umfassen, wobei die Primärpartikel eine durch Formel 1 dargestellte Verbindung umfassen:
Formel 1 LiₓM_{y}V_{z}O_{2+d}
wobei 0,1 ≤ x ≤ 2,5, 0 ≤ y ≤0,5, 0,5 ≤ z ≤ 1,5, 0 ≤ d ≤ 0,5 und M ein aus der aus Al, Cr, Mo, Ti, W, Zr und Kombinationen derselben bestehenden Gruppe ausgewähltes Metall ist.

2. Das negative aktive Material nach Anspruch 1, wobei M aus der aus Mo und W bestehenden Gruppe ausgewählt ist.

3. Das negative aktive Material nach irgendeinem der Ansprüche 1 oder 2, wobei die Primärpartikel einen durchschnittlichen Partikeldurchmesser zwischen 0,1 und 10µm aufweisen.

4. Das negative aktive Material nach irgendeinem der vorhergehenden Ansprüche, wobei die Primärpartikel eine geschichtete Struktur aufweisen.

5. Das negative aktive Material nach irgendeinem der vorhergehenden Ansprüche, wobei die Sekundärpartikel einen durchschnittlichen Partikeldurchmesser zwischen 2 und 50µm aufweisen.

6. Ein Verfahren zur Herstellung eines negativen aktiven Materials für eine wiederaufladbare Lithium-Batterie gemäß Anspruch 1, wobei das Verfahren folgende Schritte umfasst:
Lösen eines Vanadium-Ausgangsmaterials, eines Lithium-Ausgangsmaterials und eines M-Ausgangsmaterials in einem Lösungsmittel zum Bilden einer Mischung, wobei M aus der aus Al, Cr, Mo, Ti, W, Zr und Kombinationen derselben bestehenden Gruppe ausgewählt wird;
Hinzufügen eines Chelatbildners zu der Mischung zum Herstellen eines Gels;
Trocknen des Gels zum Herstellen eines organisch-anorganischen Präkursors; und
Wärmebehandeln des organisch-anorganischen Präkursors bei einer Temperatur zwischen 800 und 1200°C.

7. Das Verfahren nach Anspruch 6, wobei das Vanadium-Ausgangsmaterial aus der aus Vanadiummetall, VO, V₂O₃, V₂O₄, V₂O₅, V₄O₇, VOSO₄·H₂O, NH₄VO₃ und Mischungen derselben bestehenden Gruppe ausgewählt wird.

8. Das Verfahren nach irgendeinem der Ansprüche 6 oder 7, wobei das Lithium-Ausgangsmaterial aus der aus Lithiumcarbonaten, Lithiumhydroxiden, Lithiumnitraten, Lithiumacetaten und Mischungen derselben bestehenden Gruppe ausgewählt wird.

9. Das Verfahren nach irgendeinem der Ansprüche 6 bis 8, wobei das M-Ausgangsmaterial aus der aus M enthaltenden Oxiden, M enthaltenden Hydroxiden und Mischungen derselben bestehenden Gruppe ausgewählt wird.

10. Das Verfahren nach irgendeinem der Ansprüche 6 bis 9, wobei der Chelatbildner aus der aus Polyvinylalkohol, Polyalkylenglykolen, Poly(meth)acrylsäuren, Polyvinylbutyral, Carbonsäure und Mischungen derselben bestehenden Gruppe ausgewählt wird.

11. Das Verfahren nach irgendeinem der Ansprüche 6 bis 10, wobei das Trocknen bei einer Temperatur zwischen 100 und 400°C ausgeführt wird.

12. Das Verfahren nach irgendeinem der Ansprüche 6 bis 11, wobei die Wärmebehandlung unter einer Stickstoffatmosphäre ausgeführt wird.

13. Eine negative Elektrode für eine wiederaufladbare Lithium-Batterie, umfassend:
ein negatives aktives Material gemäß irgendeinem der Ansprüche 1 bis 5.

14. Eine wiederaufladbare Lithium-Batterie, umfassend:
eine negative Elektrode gemäß Anspruch 13.

## Revendications

1. Matière active négative pour une batterie rechargeable au lithium comprenant :
des particules secondaires comprenant des assemblages de particules primaires, dans laquelle les particules primaires comprennent un composé représenté par la formule 1 :
formule 1 : LiₓM_{y}V₂O_{2+d}
où, 0, 1 ≤ x ≤ 2,5, 0 ≤ y ≤ 0, 5, 0, 5 ≤ z ≤ 1,5, 0 ≤ d ≤ 0,5, et M est un métal choisi dans le groupe constitué de Al, Cr, Mo, Ti, W, Zr et leurs combinaisons.

2. Matière active négative selon la revendication 1, dans laquelle M est choisi dans le groupe constitué de Mo et W.

3. Matière active négative selon l'une quelconque des revendications 1 ou 2, dans laquelle les particules primaires ont un diamètre moyen de particule allant de 0,1 à 10 µm.

4. Matière active négative selon l'une quelconque des revendications précédentes, dans laquelle les particules primaires ont une structure stratifiée.

5. Matière active négative selon l'une quelconque des revendications précédentes, dans laquelle les particules secondaires ont un diamètre moyen de particule allant de 2 à 50 µm.

6. Procédé de préparation d'une matière active négative pour une batterie rechargeable au lithium selon la revendication 1, le procédé comprenant les étapes consistant :
à dissoudre une matière source à base de vanadium, une matière source à base de lithium et une matière source à base de M dans un solvant pour former une composition, dans laquelle M est choisi dans le groupe constitué de Al, Cr, Mo, Ti, W, Zr et leurs combinaisons ;
à ajouter un agent chélatant à la composition pour préparer un gel ;
à sécher le gel pour préparer un précurseur organique-inorganique ; et
à soumettre le précurseur organique-inorganique à un traitement thermique à une température allant de 800 à 1200°C.

7. Procédé selon la revendication 6, dans lequel la matière source à base de vanadium est choisie dans le groupe constitué de vanadium métal, VO, V₂O₃, V₂O₄, V₂O₅, V₄O₇, VOSO₄·H₂O, NH₄VO₃ et leurs mélanges.

8. Procédé selon l'une quelconque des revendications 6 ou 7, dans lequel la matière source à base de lithium est choisie dans le groupe constitué des carbonates de lithium, des hydroxydes de lithium, des nitrates de lithium, des acétates de lithium et de leurs mélanges.

9. Procédé selon l'une quelconque des revendications 6 à 8, dans lequel la matière source à base de M est choisie dans le groupe constitué des oxydes contenant M, des hydroxydes contenant M et de leurs mélanges.

10. Procédé selon l'une quelconque des revendications 6 à 9, dans lequel l'agent chélatant est choisi à partir du groupe constitué de l'alcool polyvinylique, des polyalkylèneglycols, des acides poly(méth)acryliques, du polyvinylbutyral, de l'acide carboxylique et de leurs mélanges.

11. Procédé selon l'une quelconque des revendications 6 à 10, dans lequel le séchage se fait à une température allant de 100 à 400 °C.

12. Procédé selon l'une quelconque des revendications 6 à 11, dans lequel le traitement thermique se fait sous atmosphère d'azote.

13. Électrode négative pour une batterie rechargeable au lithium comprenant une matière active négative selon l'une quelconque des revendications 1 à 5.

14. Batterie rechargeable au lithium comprenant une électrode négative selon la revendication 13.
